# EUROPEAN PATENT APPLICATION

(11) **EP 4 539 594 A1**
(43) Date of publication of application: **16.04.2025**
(21) Application number: 22946114.0
(22) Date of filing: 13.06.2022
(51) Int. Cl.: H04W 84/12, H04W 76/15

(54) **COMMUNICATION METHOD, NETWORK DEVICE, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2022/098466
(87) International publication number: WO 2023/240414

(57) **Abstract**

The embodiments of the present disclosure belong to the technical field of mobile communications. Provided are a communication method, a network device, an electronic device, and a storage medium. The communication method is applied to an access point (AP) device which supports multiple links. The method comprises: determining a target radio frame, wherein the target radio frame carries a basic multi-link (ML) information element, the basic ML information element comprises a target identification bit, and the target identification bit indicates that the value of the maximum simultaneous connected number field of the basic ML information element changes (101); and sending the target radio frame (102). An implementation of adding a new auxiliary AP is provided in the embodiments of the present disclosure.

## Description

### TECHNICAL FIELD

Embodiments of the disclosure relate to the field of mobile communication technologies, in particular to a communication method, a network device, an electronic device and a storage medium.

### BACKGROUND

With the rapid development of mobile communication technologies, the Wireless Fidelity (Wi-Fi) technology has made a great progress in terms of transmission rate and throughput. Currently, the Wi-Fi technology studies 320MHz bandwidth transmission, aggregation and collaboration of multiple frequency bands, and the like, and main application scenarios of the Wi-Fi technology include video transmission, Augmented Reality (AR), and Virtual Reality (VR).

In detail, the aggregation and collaboration of multiple frequency bands refers to simultaneous communication between devices in 2.4GHz, 5.8GHz, 6GHz and other frequency bands. For the scenario where devices communicate with each other in multiple frequency bands at the same time, a new Media Access Control (MAC) mechanism may be defined for management. In addition, the aggregation and collaboration of multiple frequency bands is expected to be able to support a low-latency transmission.

Currently, the aggregation and collaboration of multiple frequency bands may support a maximum bandwidth of 320MHz (160MHz+160MHz), and may also support 240MHz (160MHz+80MHz) and other bandwidths supported by the existing standards.

In the currently studied Wi-Fi technology, an Access Point (AP) Multi-Link Device (MLD) can add a new affiliated AP at any time. Therefore, it is necessary to provide an implementation way of adding a new affiliated AP, to improve a management and control mechanism of affiliated APs and improve a local throughput.

### SUMMARY

Embodiments of the disclosure provide a communication method, a network device, an electronic device and a storage medium, to provide a way of adding new affiliated APs.

A first aspect of embodiments of the disclosure provides a communication method, which is applied to an access point multi-link device (AP MLD). The method includes:
determining a target radio frame, wherein the target radio frame carries a basic multi-link (ML) information element, the basic ML information element comprises a target identifier bit, and the target identifier bit indicates that a value of a maximum number of simultaneous links field of the basic ML information element changes; and
sending the target radio frame.

A second aspect of embodiments of the disclosure provides a network device, which may be an AP MLD. The network device includes:
a determining module, configured to determine a target radio frame, in which the target radio frame carries a basic ML information element, the basic ML information element comprises a target identifier bit, and the target identifier bit indicates that a value of a maximum number of simultaneous links field of the basic ML information element changes; and
a sending module, configured to send the target radio frame.

Embodiments of the disclosure also provide an electronic device, including a memory, a processor, and a computer program stored in the memory and executable by the processor. When the processor executes the program, one or more methods in the embodiments of the disclosure can be implemented.

Embodiments of the disclosure also provide a computer-readable storage medium having a computer program stored therein. When the computer program is executed by a processor, one or more methods in the embodiments of the disclosure can be implemented.

In embodiments of the disclosure, the AP MLD carries the basic ML information element in the target radio frame and sends the target radio frame. The basic ML information element includes the target identifier bit, where the target identifier bit indicates that the value of the maximum number of simultaneous links field of the basic ML information element changes, and indirectly identified that a new affiliated AP has been added or an old affiliated AP has been removed. Embodiments of the disclosure provides an implementation way of adding new affiliated APs or removing old affiliated APs, to improve a management and control mechanism of affiliated APs and improve a local throughput.

Additional aspects and advantages of embodiments of the disclosure will be given in part in the following descriptions, and become apparent from the following descriptions, or be learned from the practice of the disclosure.

### BRIEF DESCRIPTION OF THE DRAWINGS

In order to clearly illustrate technical solutions of embodiments of the disclosure, a brief description of drawings used in embodiments is given below. Obviously, the drawings in the following descriptions are only part of the embodiments of the disclosure, and for those skilled in the art, other drawings can be obtained according to these drawings without inventive work.
FIG. 1 is a first flowchart of a communication method according to an embodiment of the disclosure.
FIG. 2 is a second flowchart of a communication method according to an embodiment of the disclosure.
FIG. 3 is a third flowchart of a communication method according to an embodiment of the disclosure.
FIG. 4 is a fourth flowchart of a communication method according to an embodiment of the disclosure.
FIG. 5 is a schematic diagram of a network device according to an embodiment of the disclosure.
FIG. 6 is a schematic diagram of an electronic device according to an embodiment of the disclosure.

### DETAILED DESCRIPTION

In the embodiments of the disclosure, the term "and/or" describes a relation of associated objects, which indicates three relations, for example, A and/or B indicates that A exists alone, A and B both exist, and B exists alone. The character "/" generally indicates that the associated objects prior to and after the character "/" is in an "or" relation.

The term "a plurality of" in the embodiments of the disclosure refers to two or more, which is the similar for other quantifiers.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a", "said" and "the" used in the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, first information may also be referred to as second information, and similarly, second information may also be referred to as first information. Depending on the context, the term "if" as used herein can be interpreted as "when", "while" or "in response to determining".

The technical solutions in the embodiments of the disclosure will be described clearly and completely below in combination with the accompanying drawings in the embodiments of the disclosure. Clearly, the described embodiments are only a part of the embodiments of the disclosure, and not all of the embodiments. Based on the embodiments of the disclosure, other embodiments obtained by those skilled in the art without inventive works all fall within the scope of protection of the disclosure.

The embodiments of the disclosure provide a communication method, a network device, an electronic device and a storage medium, to provide an implementation way of adding a new affiliated access point (AP).

The method and the device are based on the same application conception, and since the method and the device solve problems based on a similar principle, implementations of the device and the method can be referred to each other, and the repeated contents will not elaborated here.

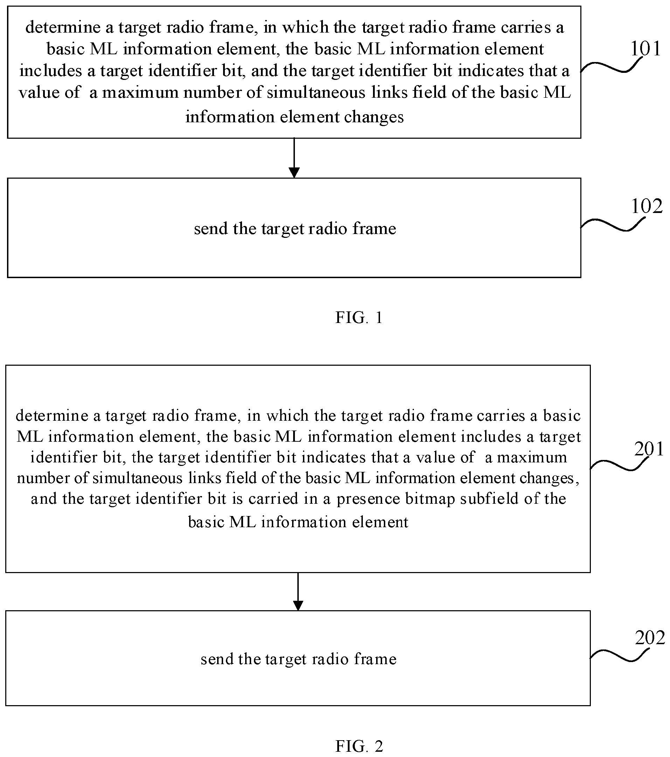

As illustrated in FIG. 1, an embodiment of the disclosure provides a communication method. Optionally, the method is applied to an access point (AP) multi-link device (MLD). The method includes the following steps.

At step 101, a target radio frame is determined, in which the target radio frame carries a basic multi-link (ML) information element, the basic ML information element includes a target identifier bit, and the target identifier bit identifies that a value of a maximum number of simultaneous links field of the basic ML information element changes.

Generally, a basic ML element is used to carry information of an MLD and the MLD's affiliated stations (STAs) in a process of ML discovery. The AP MLD may indicate, through the basic ML element, that a new affiliated AP has been added or an old affiliated AP has been removed. For example, an identifier bit is carried in the basic ML element to indicate that the number of affiliated APs changes.

In detail, the AP MLD determines a target radio frame, and carries a basic ML information element in the target radio frame. The basic ML information element includes a target identifier bit, and the target identifier bit indicates that a value of a maximum number of simultaneous links field of the basic ML information element changes, and indirectly identifies that a new affiliated AP has been added or an old affiliated AP has been removed. For example, if a value in a previously set maximum number of simultaneous links field is 4, and a value of a later set maximum number of simultaneous links field is 6, it indicates that two affiliated APs have been added. On the contrary, if a value in a previously set maximum number of simultaneous links field is 4, and a value of a later set maximum number of simultaneous links field is 3, it indicates that one affiliated AP has been removed.

The maximum number of simultaneous links field is carried in an MLD capabilities and operations subfield. The MLD capabilities and operations subfield can be carried in a common information (common info) field in the basic ML information element. As a first example, the format of the common info field in the basic ML information element is shown in the following Table 1.

**Table 1**

| Information content | Com mon Info Len gth | MLD Media Access Control (MAC) Address | Link Iden tific ation (ID) Info | Basic Service Set (BSS) Parameters Change Count | Medium Synchroniza tion Delay Information | Enhanc ed Multi-Link (EML) Capabil ities | MLD Capabilities and Operations | MLD ID |
|---|---|---|---|---|---|---|---|---|
| Octets | 1 | 6 | 0 or 1 | 0 or 1 | 0 or 2 | 0 or 2 | 0 or 2 | 0 or 1 |

The common info length subfield indicates a number of bytes in the common info field. The MLD MAC address subfield indicates a MAC address of an MLD to which a STA that transmits the basic ML belongs. The link ID info subfield indicates a link identifier of an AP to which the AP MLD belongs.

A length of the BSS parameters change count subfield is 1 octet, and the BSS parameters change count subfield carries an unsigned integer, where an initial value of the unsigned integer is 0. When a critical update occurs, a value carried in the BSS parameters change count subfield is updated to an operating parameter of the AP associated with the AP MLD.

The medium synchronization delay information subfield indicates a medium synchronization duration and a maximum number of medium synchronization transmission opportunities (TXOPs), etc.

The EML capabilities subfield indicates capabilities of an enhanced multi-link single-radio (EMLSR) operation and an enhanced multi-link multi-radio (EMLMR).

The MLD capabilities and operations subfield indicates relevant information of MLD capabilities and operations. The maximum number of simultaneous links field can be carried in this subfield.

The MLD ID subfield indicates an ID of the AP MLD that carries MLD information in the basic ML element.

At step 102, the target radio frame is sent.

The target radio frame includes a beacon frame or a probe response frame. The AP MLD can broadcast the target radio frame to indicate that a new affiliated AP has been added or an old affiliated AP has been removed.

In this embodiment of the disclosure, the AP MLD carries the basic ML information element in the target radio frame and sends the target radio frame. The basic ML information element includes the target identifier bit, where the target identifier bit indicates that the value of the maximum number of simultaneous links field of the basic ML information element changes, and indirectly identified that a new affiliated AP has been added or an old affiliated AP has been removed. Embodiments of the disclosure provide an implementation way of adding new affiliated APs or removing old affiliated APs, to improve a management and control mechanism of affiliated APs and improve a local throughput.

As illustrated in FIG. 2, an embodiment of the disclosure provides a communication method. Optionally, the method may be applied to an AP MLD. The method includes the following steps.

At step 201, a target radio frame is determined, in which the target radio frame carries a basic ML information element, the basic ML information element includes a target identifier bit, the target identifier bit indicates that a value of a maximum number of simultaneous links field of the basic ML information element changes, and the target identifier bit is carried in a presence bitmap subfield of the basic ML information element.

Generally, a basic ML element is used to carry information of an MLD and the MLD's affiliated STAs in a process of ML discovery. The AP MLD may indicate, through the basic ML element, that a new affiliated AP has been added or an old affiliated AP has been removed. For example, an identifier bit is carried in the basic ML element to indicate that the number of affiliated Aps changes.

In detail, the AP MLD determines a target radio frame, and carries a basic ML information element in the target radio frame. The basic ML information element includes a target identifier bit, and the target identifier bit indicates that a value of a maximum number of simultaneous links field of the basic ML information element changes, and indirectly identifies that a new affiliated AP has been added or an old affiliated AP has been removed. Furthermore, the target identifier bit is carried in the presence bitmap subfield of the basic ML information element. The target identifier bit is carried in the presence bitmap subfield of the basic ML information element. As a second example, the format of the presence bitmap subfield in the basic ML information element is shown in the following Table 2.

**Table 2**

| Inform ation content | Link ID Info Present | BSS Paramete rs Change Present | Medium Synchronizati on Delay Information Present | EML Capabiliti es Present | MLD Capabiliti es and Operation s Present | MLD ID Present | Reserved |
|---|---|---|---|---|---|---|---|
| Bits | 1 | 1 | 1 | 1 | 1 | 1 | 6 |

Optionally, the target identifier bit may be carried in the MLD capabilities and operations present bit or the reserved bit.

At step 202, the target radio frame is sent.

The target radio frame includes a beacon frame or a probe response frame. The AP MLD can broadcast the target radio frame to indicate that a new affiliated AP has been added or an old affiliated AP has been removed.

In an optional embodiment, the presence bitmap subfield also includes an MLD capabilities and operations present bit.

The MLD capabilities and operations Present bit is set to be a first preset parameter value. The first preset parameter value indicates that there is an MLD capabilities and operations subfield in the basic ML information element. For example, if the first preset parameter value is 1, it indicates that a common info field of the basic ML information element may include the MLD capabilities and operations subfield.

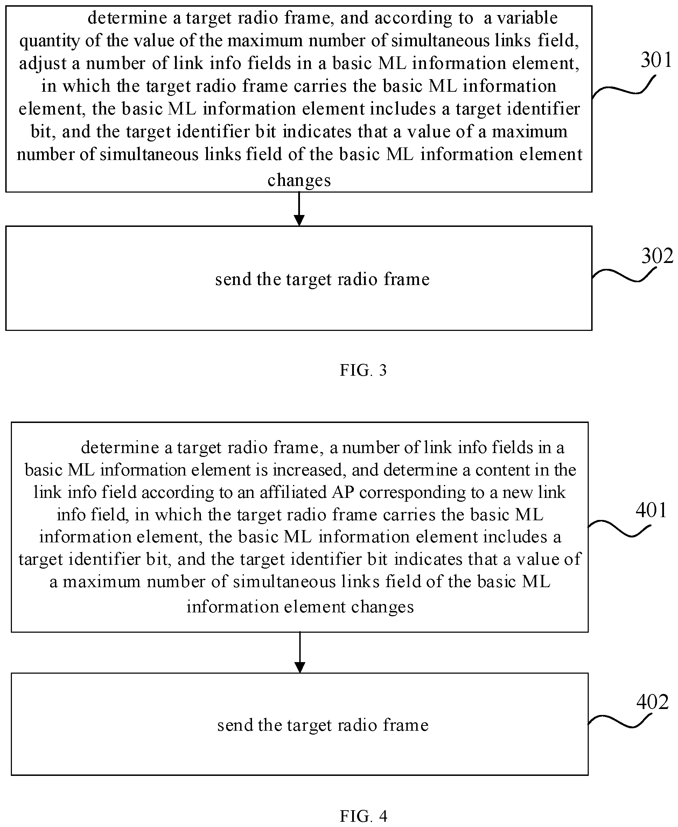

As illustrated in FIG. 3, an embodiment of the disclosure provides a communication method. Optionally, the method may be applied to an AP MLD. The method includes the following steps.

At step 301, a target radio frame is determined, and according to a variable quantity of a value of a maximum number of simultaneous links field, a number of link info fields in a basic ML information element is adjusted.

The target radio frame carries the basic ML information element. The basic ML information element includes a target identifier bit, which indicates that the value of the maximum number of simultaneous links field of the basic ML information element changes.

According to a difference between a current value of the maximum number of simultaneous links field and a previous value before the AP MLD adds or removes affiliated APs, the number of link info fields in the basic ML information element is increased or decreased. For example, if a value of a maximum number of simultaneous links field set before the AP MLD adds affiliated APs is 4, and a value of a maximum number of simultaneous links field set after addition of affiliated APs is 6, 2 more link info fields need to be increased in the basic ML information element. On the contrary, if a value of a previously set maximum number of simultaneous links field is 4, and a value of a later set maximum number of simultaneous links field is 3, one link info field needs to be decreased in the basic ML information element.

At step 302, the target radio frame is sent.

The target radio frame includes a beacon frame or a probe response frame. The AP MLD can broadcast the target radio frame to indicate that a new affiliated AP has been added or an old affiliated AP has been removed.

As illustrated in FIG. 4, an embodiment of the disclosure provides a communication method. Optionally, the method may be applied to an AP MLD. The method includes the following steps.

At step 401, a target radio frame is determined, a number of link info fields in a basic ML information element is increased, and a content in a new link info field is determined according to an affiliated AP corresponding to the new link info field.

The target radio frame carries the basic ML information element. The basic ML information element includes a target identifier bit, which indicates that a value of a maximum number of simultaneous links field of the basic ML information element changes.

According to a difference between a current value of the maximum number of simultaneous links field and a previous value before the AP MLD adds affiliated APs, the number of link info fields in the basic ML information element is increased. For example, if a value of a maximum number of simultaneous links field set before the AP MLD adds affiliated APs is 4, and a value of a maximum number of simultaneous links field set after addition of affiliated APs is 6, 2 more link info fields need to be increased in the basic ML information element.

At step 402, the target radio frame is sent.

The target radio frame includes a beacon frame or a probe response frame. The AP MLD can broadcast the target radio frame to indicate that a new affiliated AP has been added or an old affiliated AP has been removed.

In an optional embodiment, the content in the link info field includes at least one of: link ID information of a first link corresponding to the affiliated AP, a MAC address of the affiliated AP on the first link, a timer synchronization function (TSF) offset of a second link corresponding to a beacon frame or a probe response frame sent by the affiliated AP, information of the beacon frame, or information of the probe response frame.

In this embodiment of the disclosure, the AP MLD carries the basic ML information element in the target radio frame and sends the target radio frame. The basic ML information element includes a target identifier bit, which indicates that the value of the maximum number of simultaneous links field of the basic ML information element changes, and indirectly identifies that new affiliated APs have been added or old affiliated APs have been removed. Embodiments of the disclosure provide an implementation way of adding new affiliated APs or removing old affiliated APs, to improve the management and control mechanism of affiliated APs and improve local throughput.

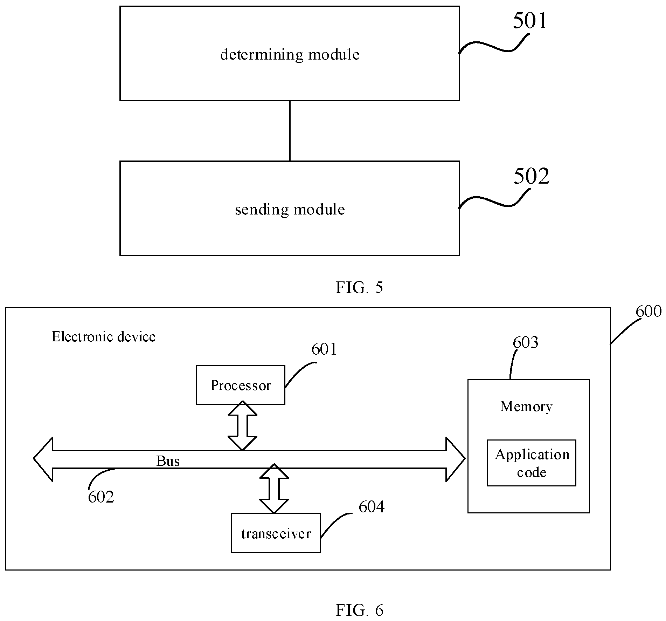

As illustrated in FIG. 5, based on the same principle as the methods provided by the embodiments of the disclosure, embodiments of the disclosure provides a network device. The network device may be an AP MLD. The network device includes:
a determining module 501, configured to determine a target radio frame, in which the target radio frame carries a basic ML information element, the basic ML information element includes a target identifier bit, and the target identifier bit indicates that a value of a maximum number of simultaneous links field of the basic ML information element changes.

Generally, a basic ML element is used to carry information of an MLD and the MLD's affiliated STAs in a process of ML discovery. The AP MLD may indicate, through the basic ML element, that a new affiliated AP has been added or an old affiliated AP has been removed. For example, an identifier bit is carried in the basic ML element to indicate that the number of affiliated APs changes.

In detail, the AP MLD determines a target radio frame, and carries a basic ML information element in the target radio frame. The basic ML information element includes a target identifier bit, and the target identifier bit indicates that a value of a maximum number of simultaneous links field of the basic ML information element changes, and indirectly identifies that a new affiliated AP has been added or an old affiliated AP has been removed. For example, if a value in a previously set maximum number of simultaneous links field is 4, and a value of a later set maximum number of simultaneous links field is 6, it indicates that two affiliated APs have been added. On the contrary, if a value in a previously set maximum number of simultaneous links field is 4, and a value of a later set maximum number of simultaneous links field is 3, it indicates that one affiliated AP has been removed.

The maximum number of simultaneous links field is carried in an MLD capabilities and operations subfield. The MLD capabilities and operations subfield can be carried in a common information (common info) field in the basic ML information element.

The network device also includes a sending module 502, which is configured to send the target radio frame.

The target radio frame includes a beacon frame or a probe response frame. The AP MLD can broadcast the target radio frame to indicate that a new affiliated AP has been added or an old affiliated AP has been removed.

Optionally, in this embodiment of the disclosure, the target identifier bit is carried in a presence bitmap subfield of the basic ML information element.

Optionally, in this embodiment of the disclosure, the presence bitmap subfield also includes an MLD capabilities and operations present bit.

The MLD capabilities and operations present bit is set to a first preset parameter value. The first preset parameter value indicates that there is an MLD capabilities and operations subfield in the basic ML information element.

Optionally, in this embodiment of the disclosure, the target radio frame includes a beacon frame or a probe response frame.

Optionally, in this embodiment of the disclosure, the determining module 501 includes:
an adjusting sub-module, configured to, according to a variable quantity of the value of the maximum number of simultaneous links field, adjust a number of link info fields in the basic ML information element.

Optionally, in this embodiment of the disclosure, the adjusting sub-module is configured to:
increase the number of link info fields in the basic ML information element, and determine a content in a new link info field according to an affiliated AP corresponding to the new link info field.

Optionally, in this embodiment of the disclosure, the content in the link info field includes at least one of: link ID information of a first link corresponding to the affiliated AP, a MAC address of the affiliated AP on the first link, a TSF offset of a second link corresponding to a beacon frame or a probe response frame sent by the affiliated AP, information of the beacon frame, or information of the probe response frame.

In this embodiment of the disclosure, the determining module 501 carries the basic ML information element in the target radio frame, and the sending module 502 sends the target radio frame. The basic ML information element includes a target identifier bit, which indicates that the value of the maximum number of simultaneous links field of the basic ML information element changes, and indirectly identifies that new affiliated APs have been added or old affiliated APs have been removed. Embodiments of the disclosure provide an implementation way of adding new affiliated APs or removing old affiliated APs, to improve the management and control mechanism of affiliated APs and improve local throughput.

An embodiment of the disclosure provides a communication apparatus, which can be applicable for an AP MLD. The communication apparatus includes:
a radio frame determining unit, configured to determine a target radio frame, in which the target radio frame carries a basic ML information element, the basic ML information element includes a target identifier bit, and the target identifier bit indicates that a value of a maximum number of simultaneous links field of the basic ML information element changes; and
a sending unit, configured to send the target radio frame.

The communication apparatus also includes other modules of the network device in the aforementioned embodiments, which will not be described in detail here.

In an optional embodiment, the embodiments of the disclosure also provide an electronic device. As illustrated in FIG. 6, the electronic device 600 shown in FIG. 6 may be a server, which includes: a processor 601 and a memory 603. The processor 601 is connected to the memory 603, for example, via a bus 602. Optionally, the electronic device 600 may also include a transceiver 604. It should be noted that there may be one or more transceivers 604 in practical applications, and the structure of the electronic device 600 does not constitute a limitation of the embodiments of the disclosure.

The processor 601 can be a Central Processing Unit (CPU), a general purpose processor, a Digital Signal Processor (DSP), an Application Specific Integrated Circuit (ASIC), a Field Programmable Gate Array (FPGA) or other programmable logic devices, transistor logic devices, hardware components, or any combination thereof. The processor 601 may implement or execute various exemplary logic boxes, modules, and circuits described in combination with the description disclosed in the disclosure. The processor 601 may also be a combination that implements a computing function, for example, a combination consisting of one or more microprocessors, and a combination consisting of DSPs and microprocessors.

The bus 602 may include a pathway to transfer information among the above components. The bus 602 may be a Peripheral Component Interconnect (PCI) bus or an Extended Industry Standard Architecture (EISA) bus. The bus 602 can be categorized as an address bus, a data bus, a control bus, and the like. For ease of representation, the bus 602 is represented by only one thick line in FIG. 6, but it does not indicate that there is only one bus or one type of bus.

The memory 603 may be a Read Only Memory (ROM) or other types of static storage devices for storing static information and instructions, a Random Access Memory (RAM) or other types of dynamic storage devices for storing information and instructions, an Electrically Erasable Programmable Read Only Memory (EEPROM), a Compact Disc Read Only Memory (CD-ROM) or other optical disc memories, optical disk memories (including compact disc, laser disc, CD-ROM, digital general disc, and Blu-ray disc), disk storage mediums or other magnetic storage devices, or any other medium that can be used to carry or store expected program codes in the form of instructions or data structures and can be accessed by a computer, which is not limited herein.

The memory 603 is configured to store application codes for executing the solution of the disclosure, and the execution is controlled by the processor 601. The processor 601 is configured to execute the application codes stored in the memory 603 to implement the contents shown in the foregoing method embodiments.

The electronic device includes but is not limited to: a mobile phone, a notebook computer, a digital broadcast receiver, a personal digital assistant (PDA), a PAD, a portable multimedia player (PMP), a vehicle-mounted terminal (e.g., vehicle-mounted navigation terminal) and other mobile terminals, and fixed terminals such as a digital TV and a desktop computer. The electronic device shown in FIG. 6 is only an example and should not impose any limitation on the functions and scope of use of the embodiments of the disclosure.

The server provided by the disclosure may be a standalone physical server, a server cluster or a distributed system comprising multiple physical servers, or a cloud server providing basic cloud computing services such as cloud services, cloud database, cloud computing, cloud functions, cloud storage, network services, cloud communication, middleware services, domain name services, security services, Content Distribution Network (CDN), and big data and artificial intelligence platforms. The terminal may include, but is not limited to, a smartphone, a tablet, a laptop, a desktop computer, a smart speaker, and a smart watch. The terminal and the server may be connected directly or indirectly in a wired or wireless manner, which is not limited herein.

The embodiments of the disclosure provide a computer-readable storage medium having computer programs stored thereon. When the computer programs are executed by a computer, the computer is caused to execute the corresponding contents of the foregoing method embodiments.

It should be understood that although various steps in the flowcharts of the accompanying drawings are shown in sequence as indicated by arrows, these steps are not necessarily performed in the order indicated by the arrows. Unless explicitly stated in this article, the execution of these steps is not strictly limited in order, and they can be performed in any other order. Moreover, at least some of the steps in the flowchart of the accompanying drawings may include multiple sub-steps or multiple stages. These sub-steps or stages are not necessarily executed at the same time, but may be executed at different times, and the order of the execution is not necessarily sequential, but may be executed in turn or alternately with other steps or at least a portion of sub-steps or stages of other steps.

It is noted that the computer-readable medium described above in the disclosure may be a computer-readable signaling medium, a computer-readable storage medium or any combination thereof. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic memory devices, or any suitable combination thereof. In the disclosure, the computer-readable storage medium may be any tangible medium containing or storing programs that may be used by or in combination with an instruction execution system, apparatus or device. In the disclosure, a computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that can be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

The above computer-readable medium may be contained in the above electronic device or exist independently rather than being assembled into the electronic device.

The computer-readable medium carries one or more programs. When the one or more programs are executed by the electronic device, the electronic device is caused to implement the method shown in the above embodiments.

According to an aspect of the disclosure, a computer program product or computer program is provided. The computer program product or computer program includes computer instructions stored in a computer-readable storage medium. The processor of the computer device reads the computer instructions from the computer-readable storage medium, and the processor executes the computer instructions to cause the computer device to implement the method provided in the above optional implementations.

The computer program codes for performing the operations of the disclosure may be written in one or more programming languages or combinations thereof. The above programming languages include object-oriented programming languages, such as Java, Smalltalk, and C++, and conventional procedural programming languages, such as C programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a LAN or a Wide Area Network (WAN), or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of codes, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

The modules described in the embodiments of the disclosure may be realized through software or hardware. The name of a module does not constitute a limitation of the module itself in a certain case. For example, module A may also be described as module A for performing an operation B.

The above description is only a description of preferred embodiments of the disclosure and an explanation of the technical principles utilized. It should be understood by those skilled in the art that the scope of disclosure involved in the disclosure is not limited to the technical solutions formed by a particular combination of the above technical features, but also covers other technical solutions formed by any combination of the above technical features or their equivalent features without departing from the above disclosed concept, for example, the technical solution formed by interchanging the above features with technical features with similar functions disclosed (but not limited to) in the disclosure.

## Claims

1. A communication method, applied to an access point (AP) multi-link device (MLD), comprising:
determining a target radio frame, wherein the target radio frame carries a basic multi-link (ML) information element, the basic ML information element comprises a target identifier bit, and the target identifier bit indicates that a value of a maximum number of simultaneous links field of the basic ML information element changes; and
sending the target radio frame.

2. The method of claim 1, wherein the target identifier bit is carried in a presence bitmap subfield of the basic ML information element.

3. The method of claim 2, wherein the presence bitmap subfield comprises an MLD capabilities and operations present bit;
wherein the MLD capabilities and operations present bit is set to be a first preset parameter value, and the first preset parameter value indicates that there is an MLD capabilities and operations subfield in the basic ML information element.

4. The method of claim 1, wherein the target radio frame comprises a beacon frame or a probe response frame.

5. The method of claim 1, wherein determining the target radio frame comprises:
according to a variable quantity of the value of the maximum number of simultaneous links field, adjusting a number of link information (info) fields in the basic ML information element.

6. The method of claim 5, wherein adjusting the number of link info fields in the basic ML information element comprises:
increasing the number of link info fields in the basic ML information element, and determining a content in a new link info field according to an affiliated AP corresponding to the new link info field.

7. The method of claim 6, wherein the content in the link info field comprises at least one of: link identification (ID) information of a first link corresponding to the affiliated AP, a media access control (MAC) address of the affiliated AP on the first link, a timer synchronization function (TSF) offset of a second link corresponding to a beacon frame or a probe response frame sent by the affiliated AP, information of the beacon frame, or information of the probe response frame.

8. A network device, which is an access point (AP) multi-link device (MLD), comprising:
a determining module, configured to determine a target radio frame, wherein the target radio frame carries a basic multi-link (ML) information element, the basic ML information element comprises a target identifier bit, and the target identifier bit indicates that a value of a maximum number of simultaneous links field of the basic ML information element changes; and
a sending module, configured to send the target radio frame.

9. An electronic device, comprising a memory, a processor, and a computer program stored in the memory and executable by the processor, wherein when the processor executes the program, the method described in any one of claims 1-7 is implemented.

10. A computer-readable storage medium having a computer program stored therein, wherein when the computer program is executed by a processor, the method according to any one of claims 1-7 is implemented.
